(19) Europäisches Patentamt
European Patent Office
Office européen des brevets

(11) **EP 3 633 579 A1**

(12) **EUROPEAN PATENT APPLICATION**

(43) Date of publication:
**08.04.2020 Bulletin 2020/15**

(51) Int Cl.:
***G06Q 30/02*** *(2012.01)*

(21) Application number: **18198199.4**

(22) Date of filing: **02.10.2018**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **adlicious GmbH
22765 Hamburg (DE)**

(72) Inventor: **Propp, Dmitrij
20257 Hamburg (DE)**

(74) Representative: **Grünecker Patent- und
Rechtsanwälte
PartG mbB
Leopoldstraße 4
80802 München (DE)**

(54) **METHOD FOR CONTROLLING PLACEMENT OF ADVERTISEMENTS OVER A NETWORK**

(57)   A method for improving effectiveness of advertising comprises creating (401), for one or more demand side platforms, DSPs (20), user trackings for a first advertisement to be placed via the DSPs. At each DSP an advertisement campaign is created (402), targeting a first and excluding a second audience group. When the first advertisement has been placed by one of the DSP, each DSP receives (403) an indication from a corresponding user tracking. The DSPs add (404) user identity information contained in the indication to the second audience group, and target the second audience group with a second advertisement. The method further comprises calculating a qualified cost per mille, qCPM, whereby the cost per mille is corrected by the fraction of audience in the target audience, the viewability of the ad, the fraction of impressions in contact classes 4 to 6, and an ad impact weight.

FIG. 2

**Description**

BACKGROUND OF THE INVENTION

Placing advertisements via the World Wide Web is of ever-increasing importance for marketing campaigns. Publishers such as website owners produce content of interest to users. Advertisement space which is embedded in the website for presenting the content is offered for purchase by advertisers. The most significant progress in recent years in online advertisement display has been the technology of programmatic advertising. Programmatic advertisement allows the automatic buying and selling of advertisement space on websites in real time while the website is still being rendered on a user device. The ad space is sold before rendering is finished and a user is presented with an appropriate ad, achieving an ad impression for the ad. When an advertisement is displayed on a user display, an ad impression for the ad displayed is counted which is reported to the advertiser by an embedded user tracking.

The technical basis for the automatic buying and selling of advertisement spaces comprises a supply side platform (SSP), a demand side platform (DSP), and an ad exchange (ADX). Publishers can offer their ad spaces for sale on an ADX via the SSP, while DSPs allow advertisers to buy ad impressions on an ADX. DSPs can further be employed to create advertisement campaigns which allow setting a target audience and a list of excluded audience. Audiences may be defined by statistical or behavioral data or may be defined by user identity information e.g. available via cookie information. The matching between sellers and buyers of ad impressions proceeds in a process of real time bidding (RTB).

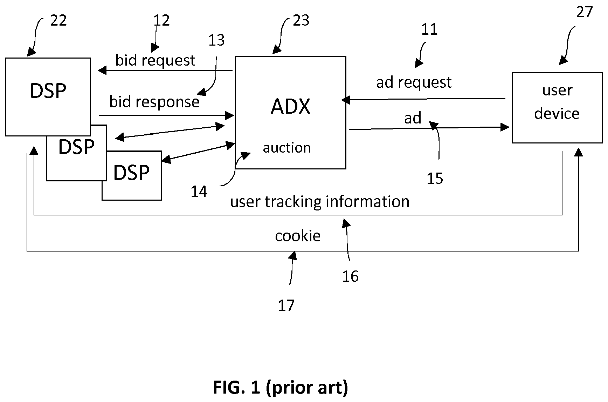

Figure 1 illustrates the process of RTB according to the prior art. To fill the ad space contained in a downloaded web page, the user device 27 connects to the publisher's ad server (not shown in Figure 1), which, possibly via a SSP, forwards the ad request 11 to ADX 23. ADX 23 sends a bid request 12 to DSP 22. The bid request 12 can include information on the ad space available, such as the website where the ad will be placed, and user information. User information can be available e.g. by user identity information read from a cookie on the user device. Alternatively or additionally, information on the user to whom the ad will be displayed may be made available to the DSP by consulting a data management platform. If the ad space and the user is of interest according to the targeting in the advertisement campaign, the DSP 22 responds with a bid response 13, which comprises a bid price and the ad graphics to be placed. The ad exchange 23 selects a winning bid in an auction 14 and forwards the ad of the winning bid to the user device at step 15. When displayed on the user device, user tracking included in the ad reports user information 16 to the DSP. The user tracking may define the user identity information by creating a unique ID. In response, the DSP can drop a cookie 17 on the user device including the user identity information. The cookie 17 is a short text sent from the DSP 22 to the user device 27, which allows identification of the user device 27. DSPs 22 allow setting a frequency capping that ensures that each user identified by a cookie does not receive more ad impressions of the given ad than set in the frequency cap.

The contact class of a user, which is the number of impressions with an advertisement for a particular product received by the user, should be at 4 to 6 for an optimal performance and thus effectiveness of the advertisement campaign. The RTB process however leads to the problem that a specific advertisement is only placed once at most users. Since the highest bid is served first, each user is reached only once in most cases. Frequency capping only allows setting the maximal ad impressions for a user but does not guarantee a minimum number of ad impressions. Therefore, current technologies for the placing of ads over the World Wide Web suffer from the problem that the number of ad impressions per user cannot be controlled. As noted above, technologies available in the state of the art only allow the setting of a frequency capping that limits the maximal contact class of a user.

It is object of the present invention to improve effectiveness of advertising over a network.

This object is solved by the subject matter of the independent claims.

Embodiments are defined by the dependent claims.

The present invention provides a method for controlling placement of advertisements over a network such that the contact class of users is optimized. The present invention relies on creating, for a plurality of DSPs, a respective plurality of user trackings for a first advertisement. The method described in the present invention can also employ only one DSP. At each of the DSPs, a first advertisement campaign targeting a first advertisement is created. Creating the advertisement campaign includes configuring the DSP to target the first audience group and exclude a second audience group. The first audience group is identical for all of the DSPs. Creating the advertisement campaign at each of the DSPs further includes employing the plurality of user trackings to track displaying of the first advertisement on user devices. Creating the advertisement campaign at each of the DSPs further includes setting a frequency cap of one for the displaying of the first advertisement.

When the first advertisement is displayed on a user device each of the DSPs receive an indication from the corresponding user tracking, the indication including user identity information. Each of the DSPs then adds the user identity information to its second audience group.

At each of the DSPs, a second advertisement campaign targeting the second audience group of the DSP with a second advertisement is created.

Accordingly, the solution of the present invention comprises employing a plurality of user trackings to track the displaying of the advertisement. This entails that when a given DSP successfully places an ad impression on a user device, not only the DSP which placed the ad obtains user tracking information, but all of the other DSPs obtain the same information. With this user tracking information each of the DSPs can add the user identity information to a second audience group. Since the first advertisement is targeted to the first audience group and excludes the second audience group, and because a frequency cap of one is employed, the given user will not receive the first advertisement again. Furthermore, each of the DSPs can create a second advertisement campaign targeting the second audience group and excluding a third audience group, and employ a plurality of second user trackings for the second advertisement. Thereby, repeating the targeting, excluding and adding of users to audience groups, it can be ensured that users are transferred from the first contact class to the second contact class on to a third and fourth contact class.

The solution of the present invention allows to control the contact class of users. Thereby, the solution of the present invention allows to create advertisement campaigns which optimize the contact class distribution and increase marketing performance of the campaign.

The present invention further provides a server computer, which preferably is an ad server, comprising communication means configured to receive user trackings from each of a plurality of DSPs. Processors of the server computer are configured to create a joint user tracking based on the plurality of user trackings. Storage of the server computer stores a plurality of configurations, each configuration being for a DSP. Each configuration comprises first settings for a first advertisement campaign with a first advertisement, the settings defining a first audience group as target audience and a second audience group of the DSP as excluded audience. The first settings further define that the second audience group of the DSP is profiled by the joint user tracking so that in response to receiving an indication that the ad has been displayed on a user device, the DSP adds user identity information to the second audience group. Each configuration stored in the storage further comprises at least second settings for a second advertisement campaign with a second advertisement. Communication means of the server computer are further configured to send each configuration of the plurality of configurations to the DSPs.

The present invention further provides a system comprising the server computer as described above and a plurality of DSP servers. Each DSP server is configured to create a first advertisement campaign according to the first settings and a second advertisement campaign according to the second settings received from the server computer.

According to an embodiment, the system further comprises a plurality of ad exchange servers. Each ad exchange server submits, to a DSP of the plurality of DSPs, bid requests for ads to be displayed on user devices, wherein each bid request includes user identity information. Each of the DSPs submits bids in response to the bid requests including user identity information which is contained in the first audience group of the DSP but not contained in the second audience group of the DSP.

According to an embodiment, creating the second advertisement campaign further comprises excluding a third audience group of the DSP from the targeting with the second advertisement and creating a plurality of second user trackings for the second advertisement to track displaying of the second advertisement on user devices, analogous to the plurality of user trackings for the first advertisement campaign. In response to the second advertisement being displayed on a user device each of the DSPs receives an indication from the corresponding second user tracking, the indication including user identity information. Each of the DSPs then adds the user identity information to its third audience group. At each of the DSPs a third advertisement campaign targeting the third audience group of the DSP with a third advertisement is created.

According to a further embodiment, creating the third advertisement campaign further comprises excluding a fourth audience group of the DSP from the targeting with the third advertisement and creating a plurality of third user trackings for the third advertisement to track displaying of the third advertisement on user devices, analogous to the plurality of second user trackings. When the third advertisement is displayed on a user device, each of the DSPs receives an indication from the corresponding user tracking, the indication including user identity information. Each of the DSPs then adds the user identity information to its fourth audience group. Finally, at each of the DSPs, a fourth advertisement campaign targeting the fourth audience group of the DSP with a fourth advertisement is created.

According to a further embodiment, creating the fourth advertisement campaign further comprises excluding a fifth audience group of the DSP from the targeting with the fourth advertisement and creating a plurality of fourth user trackings for the fourth advertisement to track displaying of the fourth advertisement on user devices. Creating the fourth advertisement campaign comprises setting a frequency capping of three. When the fourth advertisement is displayed on a user device, each of the DSPs receives an indication from the corresponding user tracking, the indication including user identity information and information which DSP placed the fourth advertisement on the user device. The method further includes determining whether the ad was placed by a different DSP than the DSP which received the indication. User identity information is added to the fifth audience group of each DSP only when it is determined that the fourth advertisement was placed by a different DSP than the DSP which receives the indication.

According to an embodiment, the method further comprises bidding, by each of the DSPs, at a respective ad exchange server for an ad to be displayed at user devices having stored user identity information contained in the respective audience group of the DSP but not contained in the excluded audience group of the DSP. According to a further embodiment, this bidding at the respective ad exchange for an ad comprises employing user identity information read from the cookie to determine that the user is in the first audience group but not in the second audience group of the DSP.

BRIEF DESCRIPTION OF THE DRAWINGS

Embodiments of the present invention are shown in the enclosed drawings in which:

Figure 1 shows a block diagram of components and acts for performing Real-Time-Bidding for advertisement impressions according to the prior art;

Figure 2 shows an illustrative block diagram of a system configured for improving effectiveness of advertising over a network according to embodiments of the present invention;

Figure 3 shows a contact class distribution optimized according to the methods described in the present application;

Figure 4 shows a flow diagram of a method for improving effectiveness of advertising over a network according to the present invention;

Figures 5-7 show flow diagrams of methods for improving effectiveness of advertising over a network according to embodiments of the present invention;

Figure 8 shows a block diagram of a server computer configured to improve effectiveness of advertising over a network according to an embodiment of the present invention.

DETAILED DESCRIPTION

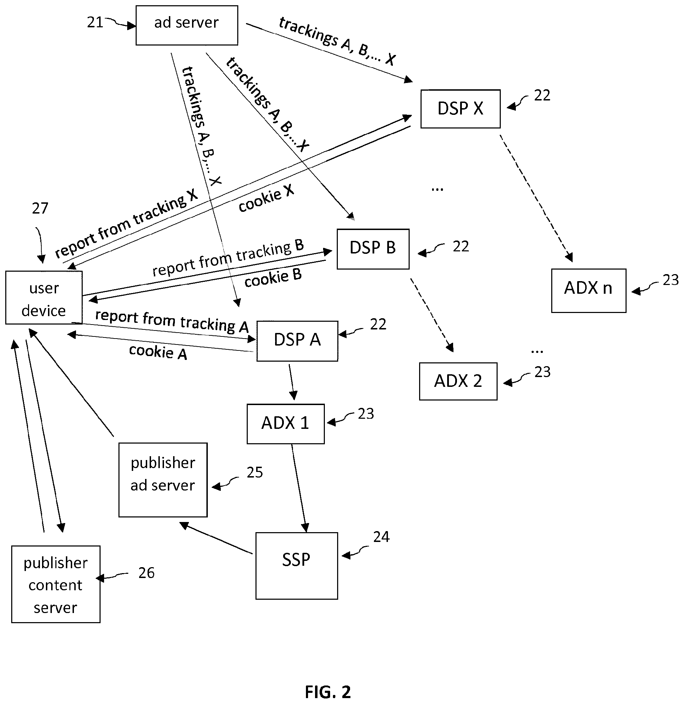

A method, an apparatus, and a system for improving effectiveness of advertising over a network will be described in detail in the following. For purposes of explanation, examples and specific details are set forth in order to provide a thorough understanding of the embodiments of the present invention. Embodiments as defined by the claims may include some or all of the features in these examples alone or in combination with other features described below and further include modifications and equivalents of the features and concepts described herein. The following description will refer to Figures 2 to 8 explaining embodiments of the present invention in detail, where applicable referring to components of conventional systems as described in relation to Fig. 1.

Figure 2 shows components of a system for performing methods of the present invention. An advertiser (not shown), who wishes to place advertisements on a user device 27, employs an ad server 21 to configure a plurality of DSPs 22. Each DSP 22 is configured by ad server 21 to run an advertisement campaign for an advertisement targeting a first audience group. The first audience group may be defined by demographic or behavioral data. Alternatively, the first audience group may comprise any user to allow targeting of unknown new users. The DSPs are further configured to exclude a second audience group from targeting with the advertisement. Ad server 21 is employed to create a plurality of user trackings, trackings A,B, ... ,X. Figure 2 shows that each DSP A,B, ...X corresponds to one of the user trackings, however, each DSP 22 can also correspond to several user trackings. Each of the user trackings reports displaying of the advertisement on a user device to the corresponding DSP 22, so that user tracking A reports to DSP A, tracking B reports to DSP B, and tracking X reports to DSP X. Each of the DSPs 22 is configured to integrate the plurality of user trackings in the advertisement, so that the advertisement placed by DSP A includes user trackings A,B, ...,X. According to an embodiment, each of the plurality of user trackings is a tracking pixel of a DSP. Integrating the plurality of user trackings in the advertisement at a DSP may comprise piggybacking the tracking pixels of the other DSPs in the tracking pixel of the DSP. Each of the DSPs 22 places a bid on an ad exchange (ADX) 23. On ad exchanges 23, ad impressions such as ad impression at user device 27 are for sale in real time. Ads on sale on ad exchanges 23 are instantly available at the time when user device 27 has downloaded a website which includes an ad space from publisher content server 26. To fill the ad space, client computer 27 contacts the publisher ad server 25, which forwards the ad space to SSP 24. SSP 24 offers the ad impression on one or more of the ad exchanges 23. The bid for the ad impression on user device 27 can be provided alongside with available user identity information such as provided by data exchanges or available by cookie synchronization.

When DSP A determines that user identity information of user device 27 is within the audience list of the advertisement campaign, it submits a bid to the ad exchange 23 that makes it likely to win the ad impression. When the ad impression is won, the advertisement is provided from DSP A via ADX 1, SSP 24, and publisher ad server 25 to the user device 27. When the ad is displayed on user device 27, the user trackings included in the advertisement are triggered to send an indication that the advertisement has been displayed on user device 27 to each DSP of the plurality of DSP 22. According to the principles explained more fully below, each DSP 22 is configured to update the audience lists and the exclusion lists.

In the following, configurations for the DSPs 22 are explained that allow optimizing the contact class distribution. For the purpose of explanation, a system employing three DSPs 22 is employed. However, the invention can also employ less or more DSPs. In another embodiment, only one DSP is employed. The following table shows the configuration of three DSPs, including DSP A, DSP B, and DSP C according to an embodiment of the present invention. This configuration is employed to achieve contact class 1 for each of the targeted users.

Table 1

|  | DSP A | DSP B | DSP C |
|---|---|---|---|
| user tracking | DSP A,B,C (KK1) | DSP A,B,C (KK1) | DSP A,B,C (KK1) |
| target audience | New users | New users | New users |
| exclusion | DSP A (KK1) | DSP B (KK1) | DSP C (KK1) |

Each of the three DSPs is configured to employ the user tracking DSP A, B, C (KK1). For example, the user trackings DSP A, B, C (KK1) can be tracking pixels. The user tracking DSP A, B, C (KK1) is based on three user trackings, one for DSP A, one for DSP B, and one for DSP C. This can be implemented by the method of piggybacking the pixels of the other DSPs in each DSP. When the user tracking DSP A, B, C (KK1) is activated, each of three user trackings, one for DSP A, one for DSP B, and one for DSP C, is activated.

For the campaign contact class 1, the target audience is new users. The exclusion list for DSP A is DSP A (KK1), which refers to the users that have received an ad impression from the DSP A, B, or C as reported by the pixel DSP A (KK1). DSP A can identify users falling in the exclusion audience group by the cookie dropped at the user device 27. When an ad impression is for sale at an ad exchange, such as ad exchanges 23 discussed above, DSP A can identify users falling under the exclusion audience group by the cookie information. DSP A does not submit a bid for users who are identified as falling under the exclusion audience group. Analogously, for DSP B, the exclusion audience group is DSP B (KK1), which analogously refers to the users who have received an ad impression reported by user tracking DSP B (KK1). Similarly, for DSP C, the exclusion audience group is DSP C (KK1). Therefore, the campaign of contact class 1 targets new users who have not received the advertisement. Since each of the DSPs employs all three user trackings, the advertisements placed by any one of DSP A, DSP B, DSP C on a user device 27 fire all user trackings. Thus, when an ad placed by any one of DSP A, DSP B, DSP C has been displayed on a user device, each of DSP A, DSP B, DSP C receives an indication by the corresponding user tracking, so that identical second audience lists are created in DSP A, DSP B, DSP C.

Table 2 shows the configuration for an additional campaign to achieve contact class 2 according to an embodiment of the present invention. The campaign to achieve contact class 2 targets the users who have received an ad impression according to the campaign for contact class 1.

Table 2

|  | DSP A | DSP B | DSP C |
|---|---|---|---|
| user tracking | DSP A,B,C (KK2) | DSP A,B,C (KK2) | DSP A,B,C (KK2) |
| target audience | DSP A (KK1) | DSP B (KK1) | DSP C (KK1) |
| exclusion | DSP A (KK2) | DSP B (KK2) | DSP C (KK2) |

For this campaign, each of the DSPs employs the user tracking DSP A, B, C (KK2), which when activated on a user computer, reports the ad impression to DSP A, DSP B, and DSP C. The report includes user identity information and the information that the pixel related to contact class 2. The target audience for the campaign for contact class 2 is DSP A (KK1), DSP B (KK1), and DSP C (KK1), respectively. This implies that only users who have received an ad impression under the campaign for contact class 1, as explained with respect to Table 1, are targeted in a campaign for contact class 2. The exclusion audience list in the contact class 2 campaign is set to DSP A (KK2), DSP B (KK2), and DSP C (KK2), respectively, which comprise users, identified by their user identity information for whom the user trackings DSP A (KK2), DSP B (KK2), and DSP C (KK2), have been triggered respectively. The campaign to achieve contact class 2 may also employ setting a frequency cap of one. Therefore, the campaign for contact class 2 allows moving users from contact class 1 to contact class 2.

For example, when DSP A is notified that an ad impression for a user falling under the target audience DSP A (KK1) is offered, DSP A may raise its bid to the ad impression to ensure that DSP A has good chances to win the option for this ad impression at the ad exchange. The campaign for contact class 2 may employ the same ad creative as the campaign for contact class 1. Alternatively, the ad creative for contact class 2 may be adapted to specifically appeal to users of the second contact class.

Table 3 displays configurations according to a further embodiment of the present invention. The configurations of Table 3 define a campaign in addition to the campaigns explained with respect to Tables 1 and 2.

Table 3

|  | DSP A | DSP B | DSP C |
|---|---|---|---|
| user tracking | DSP A,B,C (KK3) | DSP A,B,C (KK3) | DSP A,B,C (KK3) |
| target audience | DSP A (KK2) | DSP B (KK2) | DSP C (KK2) |
| exclusion | DSP A (KK3) | DSP B (KK3) | DSP C (KK3) |

The configurations of Table 3 are analogous to the configurations for the campaigns for contact classes 1 and 2 given in Tables 1 and 2, respectively. The campaign for contact class 3 allows raising the contact class of users in a target audience DSP A (KK2), DSP B (KK2), and DSP C (KK2) to exactly contact class 3 by presenting the users in the target audience with a further ad impression.

Table 4 displays configuration settings for an additional campaign for contact class 3+, targeting audiences DSP A (KK3), DSP B (KK3), and DSP C (KK3), respectively.

Table 4

|  | DSP A | DSP B | DSP C |
|---|---|---|---|
| user tracking | DSP A,B,C (KK3+) | DSP A,B,C ( KK3+) | DSP A,B,C (KK3+) |
| target audience | DSP A (KK3) | DSP B (KK3) | DSP C (KK3) |
| exclusion | DSP B,C (KK3+) | DSP A,C (KK3+) | DSP A,B (KK3+) |
| frequency capping | 3 | 3 | 3 |

Since these target audiences arise from the settings of advertisement campaigns as explained before, the target audiences of campaign for contact class 3+, are identical over all DSPs. The campaign for contact class 3+ further employs user tracking DSP A, B, C (KK3+) at DSP A, DSP B, and DSP C. In addition to reporting user identity information, user tracking DSP A, B, C (KK3+) also reports the DSP which was employed to place the ad. Thus, the user tracking DSP A, B, C (KK3+) of DSP B, when triggered, reports to DSP A that the fourth ad has been displayed and that the ad was placed by DSP B, reports to DSP B that the fourth ad has been displayed and that the ad was placed by DSP B, and reports to DSP C that the fourth ad has been displayed and that the ad was placed by DSP B.

The goal of the campaign for contact class 3+ is to achieve an optimal contact class of 4 to 6 for each user. Accordingly, frequency capping is set to 3. Furthermore, the exclusion for each DSP excludes the users in contact class 3+ by the other DSPs. Hence, DSP A excludes users reached by DSP B and DSP C, DSP B excludes users reached by DSP A and DSP C, and DSP C excludes users reached by DPS A and DSP B. Thereby, when a user has been reached once by a DSP in the campaign for contact class 3+, the DSP keeps targeting the user until the frequency cap of 3 is reached.

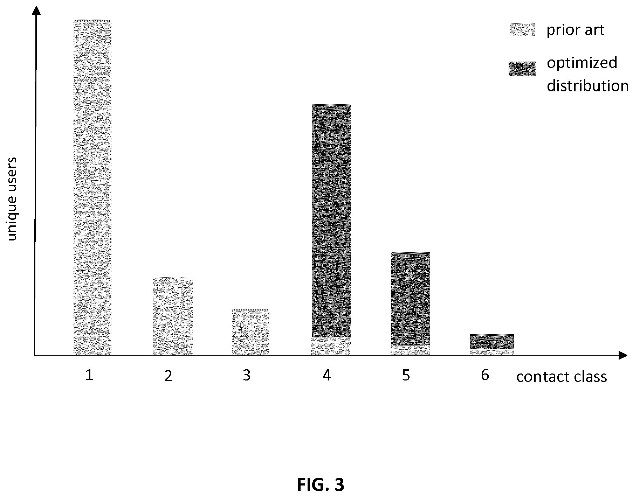

Figure 3 displays the effect of the present invention on the contact class distribution by employing the configuration settings according to Tables 1 to 4. Whereas the contact class distribution according to methods known in the art, shown in light grey, has the highest number of unique users in contact class 1, methods according to the present invention allow an optimization of the contact class distribution so that all users receive 4 to 6 ad impressions. Because it is well known in marketing that ad impressions below 3-4 are wasted, the optimized contact class distribution maximizes marketing performance.

Marketing performance may be captured by a qualified cost per mille (qCPM), which is a marketing key performance indicator that is composed of the measurable variables of cost, number of impressions, target audience, viewability, fraction of impressions in contact class 4-6, and a pre-defined ad impact weighting according to device and format. The qCMP extends the cost per mille employed in marketing by brand marketing components. The qCPM is calculated as follows.

$$qCPM = \frac{cost \cdot 1000}{qimpressions} \text{, wherein}$$

$$qimpressions = impressions \cdot (\textbf{Target Audience } [\%]) \cdot (\textbf{Viewability } [\%])$$
$$\cdot (\textbf{fraction of impressions in contact class 4-6}) \cdot (\textbf{Ad Impact Weight})$$

For the determination of the required components of the qCPM, the following software solutions are employed. For the first factor, a user verification tool, e.g. Nielsen digital ad ratings or Meetrics can be employed. For the second factor, visible impressions must be available. This can be achieved by employing an ad server, e.g., employing the Doubleclick Campaign Manager. For the third factor, the distribution of the ad impressions per unique cookie must be measured. Such a distribution is displayed in Figure 3. To determine this distribution, an ad server may be employed. For the fourth factor, a solution based on pre-defined factors for the ad effect is employed. The pre-defined factors for the ad effect are based on an economic analysis which factors in ad impact. The economic analysis is based on employing purchase prizes for varying devices and formats as equivalents for the ad impact. The economic analysis comprises obtaining an average CPM for varying devices and formats. The average CPM corresponds to a factor of one.

The calculation of the qCPM is carried out in a dedicated reporting tool. The data sources required for calculation of the qCPM, as explained above, are connected to the reporting tool via the API. The reporting tool aggregates the factors and calculates the qCPM, which can be employed to evaluate the achieved marketing performance of the advertisement campaigns according to the disclosure of the present application.

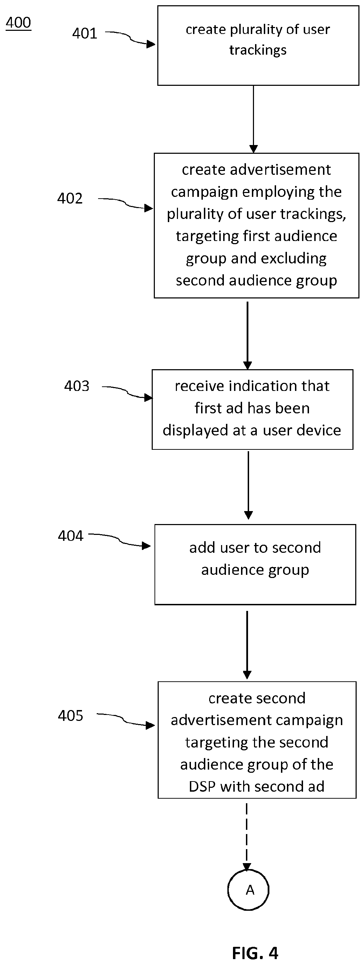

Figure 4 shows a flow chart of a method 400 for improving effectiveness of advertising over a network according to an embodiment. The method comprises creating, for a plurality of DSPs, a respective plurality of user trackings for a first advertisement to be placed via the plurality of DSPs. According to an embodiment, each DSP of the plurality of DSPs corresponds to a single user tracking of the plurality of user trackings. Method 400 comprises creating 401 a plurality of user trackings to track displaying of the first advertisement on user devices.

The method further comprises creating 402 the first advertisement campaign at each of the DSPs, the first advertisement campaign targeting a first audience group, which is the same for each DSP of the plurality of DSPs, and excluding a second audience group of the DSP from the targeting with the first advertisement. An example for the configuration of the DSPs to perform the method of Figure 4 was given in Table 1.

In response to the first advertisement being displayed on a user device, method 400 further comprises receiving 403 at each of the DSPs, an indication from the corresponding user tracking that the first advertisement has been displayed on the user device, the indication including user identity information.

According to an embodiment, the plurality of user trackings are tracking pixels for each of the DSPs, and employing the plurality of user trackings to track displaying of the first advertisement on user devices comprises integrating the tracking pixels of each of the DSPs in the first advertisement.

According to an embodiment, the method further comprises, in response to receiving the indication from the corresponding user tracking that the first advertisement has been displayed on a user device, dropping a cookie to the user device. Dropping a cookie to the user device includes sending a message from the DSP to the user device containing a cookie to be stored on the user device. The cookie contains user identity information which can be employed later to identify the user by identifying the user device. According to an embodiment, method 400 further comprises, by each of the DSPs, employing the user identity information to determine whether to bid on an ad impression which is offered by an ad exchange server. The ad exchange server may submit a bid request to the DSP, which contains user identity information. According to this embodiment, the DSP only submits bids for ad impressions at user devices having stored user identity information contained in the first audience group of the DSP but not contained in the second audience group of the DSP.

Referring again to Figure 4, the method continues with adding 404 the user identity information to the second audience group of each DSP of the plurality of DSPs. Since each advertisement based on the plurality of DSPs comprises the plurality of user trackings, each DSP receives the same indications so that the second audience groups of all DSPs are the same.

Method 400 finally includes creating 405, a second advertisement campaign targeting the second audience group of the DSP with a second advertisement. The second advertisement may employ the same ad creative as the first advertisement or may employ a different ad creative for the same product, specifically adapted to appeal to users who have already received the first advertisement.

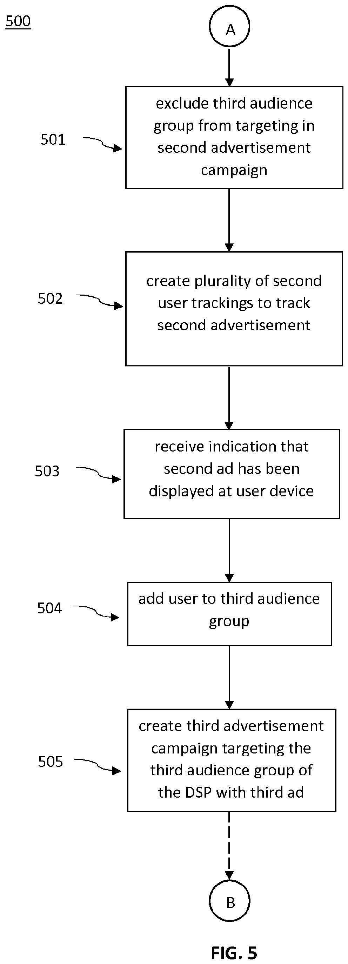

Referring to Figure 5, according to an embodiment, a further method 500 targeting users who have already received the first advertisement is described. Referring to Figure 5, continuing from method 400, method 500 comprises further to creating an advertisement campaign to target the second audience group a step of excluding 501 a third audience group from targeting with the second advertisement. In an embodiment, identifying users that fall in the second audience group may comprise reading a cookie stored on the user device.

Method 500 comprises creating 502 a plurality of second user trackings and employing the plurality of second user trackings to track displaying of the second advertisement on user devices.

Analogous to step 403 of method 400, method 500 comprises receiving 503 at each of the DSPs an indication from the corresponding second user tracking in response to the second advertisement being displayed on a user device. Again, the indication includes user identity information.

Method 500 further includes step 504 of adding the received user identity information to the third audience group of the DSP. Again, because the plurality of user trackings is contained in the advertisement placements by all DSPs, the third audience group of each DSP is identical for each DSP. Method 500 further comprises creating 505 a third advertisement campaign targeting the third audience group of the DSP with a third advertisement.

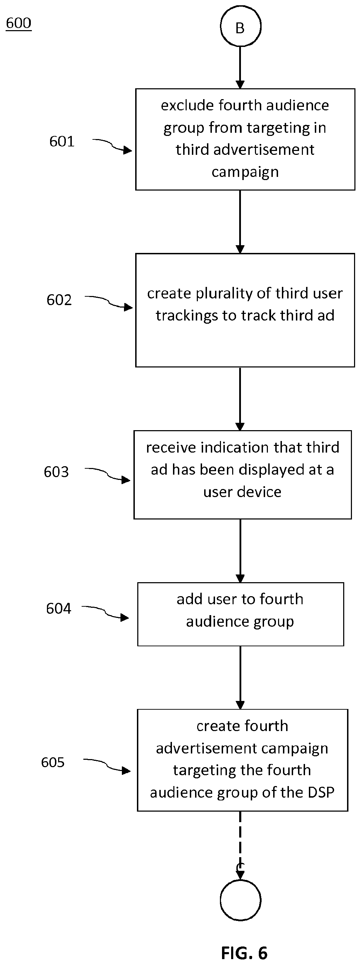

Referring to Figure 6, according to an embodiment, a further method 600 of targeting users who have already received the third advertisement is shown. Continuing from method 500, method 600 comprises creating an advertisement campaign to target the third audience group and a step 601 of excluding a fourth audience group from targeting with the third advertisement. An example for the configuration of the DSPs to perform the method of Figure 6 is given in Table 3.

Method 600 comprises creating 602 a plurality of third user trackings and employing the plurality of third user trackings to track displaying of the third advertisement on user devices.

Analogous to methods 400 and 500, method 600 comprises receiving 603 at each of the DSPs an indication from the corresponding third user tracking that the third advertisement has been displayed on a user device. Again, the indication includes user identity information.

Method 600 further includes step 604 of including the received user identity information to the fourth audience group of the DSP. Again, because the plurality of user trackings is contained in all advertisement placements, the fourth audience group is identical for each DSP. Method 600 further comprises creating 605 a fourth advertisement campaign targeting the fourth audience group of the DSP with a fourth advertisement.

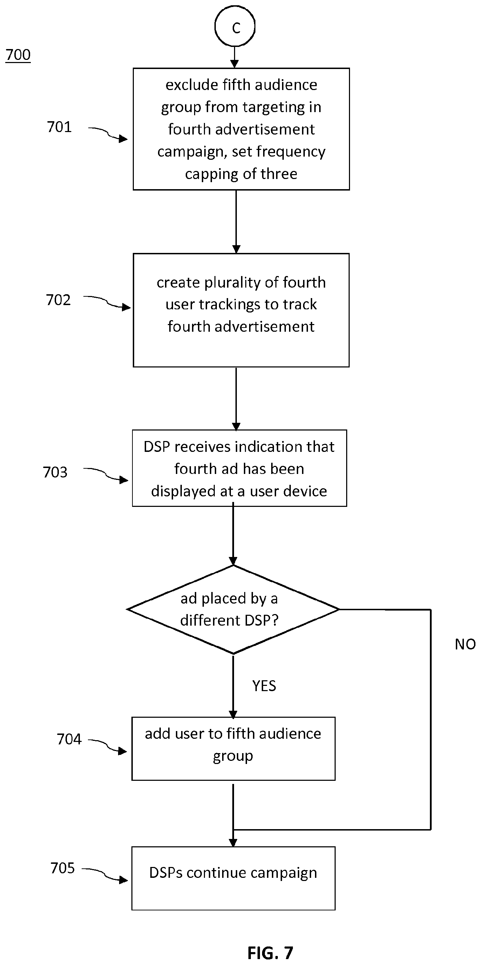

Referring to Figure 7, according to an embodiment, a fourth advertisement campaign targets users who have already received the third advertisement. Method 700 according to this embodiment comprises creating a campaign targeting the fourth audience group which has been reached with the methods 400, 500, and 600. Creating the campaign targeting the fourth audience group comprises excluding 701 a fifth audience group from targeting with the fourth advertisement. The fourth advertisement campaign further comprises setting a frequency capping of 3. An example for the configuration of the DSPs to perform the method of Figure 7 is given in Table 4.

Method 700 comprises creating 702 a plurality of fourth user trackings and employing the plurality of fourth user trackings to track displaying of the fourth advertisement on user devices. The plurality of fourth user trackings are further configured to include an indication which DSP was employed to place the fourth advertisement.

Method 700 further comprises receiving 703 at one of the DSPs an indication from the corresponding fourth user tracking that the fourth advertisement has been displayed on a user device. The indication includes user identity information and information which DSP was employed to place the ad for which the indication is sent. Method 700 proceeds by deciding whether the DSP that placed the ad is different from the DSP receiving the indication. If Yes, the user identity information is added to the fifth audience group of the DSP that received the indication. If No, this step is skipped. At step 705, the DSPs continue the campaign.

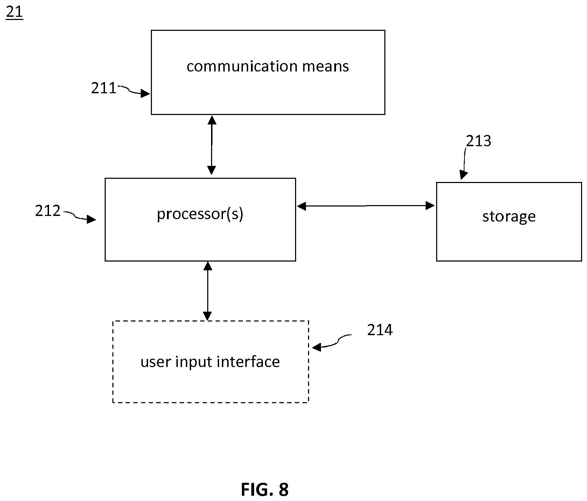

Figure 8 displays components of a server computer 21, which is employed to set configurations of the DSPs according to embodiments. Server computer 21 comprises communication means 211 configured to receive user trackings from each of a plurality of DSPs. Server computer 21 further comprises one or more processors 212 configured to create a joint user tracking based on the plurality of user trackings. According to an embodiment, processor(s) 212 employ(s) piggybacking of tracking pixels to create the joint user tracking.

Server computer 21 further comprises storage 213 storing a plurality of configurations, each configuration being a configuration for a DSP. Each configuration comprises at least first settings for a first advertisement campaign for a first advertisement, which is to be placed by the DSPs. The configuration settings may correspond to the configurations listed in Tables 1 to 4. The configuration settings may be stored in a format as defined by an interface of the DSP servers. The first settings for the first advertisement campaign define a first audience group as target audience and define a second audience group of the DSP as excluded audience.

The first settings further define that the second audience group of the DSP is profiled by the joint user tracking. That is, the DSP is instructed to add users to the second audience group upon receiving an indication from one of the user trackings of the joint user tracking. DSPs can be configured to profile users in audience groups by using the user tracking. According to the user profiling, user identity information as reported by the user tracking is added to an audience list of the DSP. Server computer 21 optionally comprises user input interface 214 that allows a user to inspect output of the server and define and/or adapt the configurations of server 21.

The configuration of the plurality of configurations stored in storage 213 according to embodiments comprises second settings for a second advertisement campaign for a second advertisement, and so on for a third and fourth campaign, wherein examples for settings of respective campaigns are given above in relation to Tables 2 to 4.

Finally, communication means 211 are further configured to send each configuration of the plurality of configurations to any one of the DSPs, or all of the DPSs, at the same time in substantially parallel manner or sequentially.

**Claims**

1.  A method for improving effectiveness of advertising over a network, the method comprising:

    creating (401), for one or more demand side platforms, DSPs (22), respective one or more user trackings for a first advertisement to be placed via the plurality of DSPs (22);
    creating (402), at each of the DSPs (22), a first advertisement campaign targeting a first audience group with the first advertisement, wherein the first audience group is the same for each DSP (22) of the one or more DSPs, the first advertisement campaign comprising employing the one or more user trackings to track displaying of the first advertisement on user devices, wherein targeting the first audience group of the DSP (22) with the first advertisement comprises excluding a second audience group of the DSP (22) from the targeting with the first advertisement;
    in response to the first advertisement being displayed on a user device, receiving (403), at each of the DSPs (22), an indication from the corresponding user tracking that the first advertisement has been displayed on the user device, the indication including user identity information;
    adding (404) the user identity information to the second audience group of each DSP of the one or more DSPs (22); and
    creating (405), at each of the DSPs (22), a second advertisement campaign targeting the second audience group of the DSP with a second advertisement.

2.  The method of claim 1, wherein the second advertisement is the same advertisement as the first advertisement or is an advertisement associated with the same product.

3.  The method of claim 1 or 2, wherein creating, at each of the DSPs (22), the first advertisement campaign further comprises setting a frequency capping of one for the first advertisement.

4.  The method of one of claims 1 to 3, wherein creating the one or more user trackings for the first advertisement comprises creating tracking pixels for each of the DSPs (22), and wherein employing the one or more user trackings to track displaying of the first advertisement on user devices comprises integrating the tracking pixels for each of the DSPs (22) in the first advertisement.

5.  The method of one of claims 1 to 4, wherein the method further comprises, by each DSP, in response to receiving the indication from the corresponding user tracking that the first advertisement has been displayed on a user device, dropping a cookie to the user device, wherein the cookie contains the user identity information.

6.  The method of one of claims 1 to 5, wherein each DSP of the one or more DSPs (22) corresponds to a single user tracking of the one or more user trackings.

7.  The method of one of claims 1 to 6, wherein the second advertisement campaign comprises:

    excluding (501) a third audience group of the DSP from the targeting with the second advertisement;
    creating (502), for the one or more DSPs (22), respective one or more second user trackings for the second advertisement, wherein the second advertisement campaign further comprises employing the one or more second user trackings to track displaying of the second advertisement on user devices, wherein the second advertisement campaign further comprises setting a frequency capping of one;
    in response to the second advertisement being displayed on a user device, receiving (503), at each of the DSPs (22), an indication from the corresponding second user tracking that the second advertisement has been displayed on the user device, the indication including user identity information; and
    adding (504) the user identity information to the third audience group of each DSP of the one or more DSPs (22), the method further comprising:

creating (505), at each of the DSPs (22), a third advertisement campaign targeting the third audience group of the DSP (22) with a third advertisement, the third advertisement campaign comprising:

excluding (601) a fourth audience group of the DSP from the targeting with the third advertisement;

creating (602), for the one or more DSPs (22), respective one or more third user trackings for the third advertisement, wherein the third advertisement campaign further comprises employing the plurality of third user trackings to track displaying of the third advertisement on user devices, wherein the third advertisement campaign further comprises setting a frequency capping of one;

in response to the third advertisement being displayed on a user display, receiving (603), at each of the DSPs (22), an indication from the corresponding third user tracking that the third advertisement has been displayed on the user device, the indication including user identity information; and

adding (604) the user identity information to the fourth audience group of each DSP of the one or more DSPs (22),

the method further comprising:

creating (605), at each of the DSPs (22), a fourth advertisement campaign targeting the fourth audience group of the DSP with a fourth advertisement.

8. The method of claim 7, wherein the fourth advertisement campaign comprises:

excluding (701) a fifth audience group of the DSP from the targeting with the fourth advertisement;

creating (702), for the one or more DSPs (22), respective one or more fourth user trackings for the fourth advertisement, wherein the fourth advertisement campaign further comprises employing the one or more fourth user trackings to track displaying of the fourth advertisement on user devices, wherein the fourth advertisement campaign further comprises setting a frequency capping of three;

in response to the fourth advertisement being displayed on a user device, receiving, at each of the DSPs (22), an indication from the corresponding fourth user tracking that the fourth advertisement has been displayed on the user device, the indication including user identity information, wherein the indication further includes information which DSP (22) placed the displayed fourth advertisement; and

for each DSP (22), when an indication from the corresponding fourth user tracking indicates that the fourth advertisement was placed by a different DSP (22) than the DSP (22) which receives the indication, adding (704) the user identity information to the fifth audience group of the DSP (22) which receives the indication.

9. The method of one of claims 1 to 8, further comprising bidding, by each of the DSPs (22), at a respective ad exchange server (23) for an ad to be displayed at user devices (27) having stored user identity information contained in the respective target audience group of the DSP (22) but not contained in the excluded audience group of the DSP (22).

10. The method of claim 9, wherein bidding at the respective ad exchange (23) for an ad to be displayed at user devices (27) having stored user identity information contained in the respective target audience group of the DSP but not contained in the excluded audience group of the DSP comprises employing user identity information read from a cookie to determine that the user is in the first audience group but not in the second audience group of the DSP.

11. The method of one of claims 1 to 10, further comprising calculating a qualified cost per mille, qCPM, as a key performance indicator for the advertisement campaigns, wherein the qualified cost per mille is calculated employing the cost of placing an ad and a qualified audience number, wherein the qualified audience number is the number of impressions corrected by the fraction of audience in the target audience, the viewability of the ad, the fraction of impressions in contact classes 4 to 6, and an ad impact weight, wherein the qCPM is preferably calculated by

$$\mathrm{qCPM} = \frac{\mathrm{cost} \cdot 1000}{\mathrm{qimpressions}}, \text{ wherein}$$

$$\mathbf{qimpressions} = \mathbf{impressions} \cdot (\mathbf{Target\ Audience\ [\%]}) \cdot (\mathbf{Viewability\ [\%]})$$
$$\cdot (\mathbf{fraction\ of\ impressions\ in\ contact\ class\ 4\text{-}6}) \cdot (\mathbf{Ad\ Impact\ Weight})$$

**12.** A server computer (21) comprising:

communication means (211) configured to receive user trackings from each of one or more DSPs (22);
one or more processors (212) configured to create a joint user tracking based on the one or more user trackings; and
storage (213) for storing one or more configurations, each configuration being a configuration for a DSP (22), wherein each configuration comprises first settings for a first advertisement campaign for a first advertisement, wherein the first settings for the first advertisement campaign define a first audience group as target audience and define a second audience group of the DSP as excluded audience, and wherein the first settings further define that the second audience group of the DSP (22) is profiled by the joint user tracking,
wherein each configuration further comprises second settings for a second advertisement campaign for a second advertisement, and
wherein the communication means (211) are further configured to send each configuration of the one or more configurations to one of the DSPs.

**13.** A system, comprising:

the server computer (21) of claim 12, and
one or more DSP servers (22),

wherein each DSP server of the one or more DSP servers (22) is configured to create a first advertisement campaign according to the first settings and a second advertisement campaign according to the second settings received from the server computer (21).

The system of claim 13, further comprising a plurality of ad exchange servers (23), wherein each ad exchange server (23) submits, to a DSP of the one or more DSPs (22), bid requests (12) for ads to be displayed on user devices, wherein each bid request includes user identity information, wherein the DSP submits bids (13) in response to bid requests including user identity information which is contained in the first audience group of the DSP but not contained in the second audience group of the DSP.

The system of claim 14, further comprising a plurality of user devices (27),
wherein a user device (27) receiving an ad is associated with user identity information contained in the first audience group but not in the second audience group, and
wherein in response to displaying the ad, the joint user tracking is triggered, wherein triggering the joint user tracking comprises triggering each user tracking of the one or
more user trackings on which the joint user tracking is based, and wherein triggering the user tracking comprises the user device (27) sending an indication to the corresponding DSP (22) that the ad has been displayed on the user device (27).

**FIG. 1 (prior art)**

FIG. 2

**FIG. 3**

400

401 → create plurality of user trackings

402 → create advertisement campaign employing the plurality of user trackings, targeting first audience group and excluding second audience group

403 → receive indication that first ad has been displayed at a user device

404 → add user to second audience group

405 → create second advertisement campaign targeting the second audience group of the DSP with second ad

A

**FIG. 4**

500

( A )

501 → exclude third audience group from targeting in second advertisement campaign

502 → create plurality of second user trackings to track second advertisement

503 → receive indication that second ad has been displayed at user device

504 → add user to third audience group

505 → create third advertisement campaign targeting the third audience group of the DSP with third ad

( B )

**FIG. 5**

600

B

601 — exclude fourth audience group from targeting in third advertisement campaign

602 — create plurality of third user trackings to track third ad

603 — receive indication that third ad has been displayed at a user device

604 — add user to fourth audience group

605 — create fourth advertisement campaign targeting the fourth audience group of the DSP

**FIG. 6**

C

700

701 → exclude fifth audience group from targeting in fourth advertisement campaign, set frequency capping of three

702 → create plurality of fourth user trackings to track fourth advertisement

703 → DSP receives indication that fourth ad has been displayed at a user device

ad placed by a different DSP?

NO

YES

704 → add user to fifth audience group

705 → DSPs continue campaign

**FIG. 7**

21

communication means

211

212 processor(s)

213

storage

214

user input interface

**FIG. 8**

Europäisches
Patentamt

European
Patent Office

Office européen
des brevets

## EUROPEAN SEARCH REPORT

Application Number

EP 18 19 8199

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2010/132571 A2 (PLUS ONE SOLUTIONS INC X [US]; JACKSON TREY [US]; PIER GREGORY S [US];) 18 November 2010 (2010-11-18) * abstract * * page 1 - page 13 * * figures 2-8 * | 1-15 | INV. G06Q30/02 |
| X | US 2016/071168 A1 (BUCHALTER YEHUDA ARI [US] ET AL) 10 March 2016 (2016-03-10) * abstract * * paragraph [0001] - paragraph [0029] * * paragraph [0052] - paragraph [0394] * | 1-15 | |
| X | US 2017/193559 A1 (ALICHERRY MANSOOR [IN]) 6 July 2017 (2017-07-06) * abstract * * paragraph [0001] - paragraph [0022] * * paragraph [0034] - paragraph [0096] * | 1-15 | |
| A | CN 108 053 252 A (GUANGZHOU SUNTENG INFORMATION TECH CO LTD) 18 May 2018 (2018-05-18) * the whole document * | 1-15 | **TECHNICAL FIELDS SEARCHED (IPC)** G06Q |
| A | US 2014/304086 A1 (DASDAN ALI [US] ET AL) 9 October 2014 (2014-10-09) * the whole document * | 1-15 | |

The present search report has been drawn up for all claims

| Place of search | Date of completion of the search | Examiner |
|---|---|---|
| The Hague | 7 December 2018 | Peelen, Bastien |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 19 8199

This annex lists the patent family members relating to the patent documents cited in the above-mentioned European search report.
The members are as contained in the European Patent Office EDP file on
The European Patent Office is in no way liable for these particulars which are merely given for the purpose of information.

07-12-2018

| Patent document cited in search report | | Publication date | Patent family member(s) | | Publication date |
|---|---|---|---|---|---|
| WO 2010132571 | A2 | 18-11-2010 | US 2012253928 A1<br>WO 2010132571 A2 | | 04-10-2012<br>18-11-2010 |
| US 2016071168 | A1 | 10-03-2016 | CA 2795128 A1<br>EP 2553643 A2<br>US 2011246267 A1<br>US 2011246297 A1<br>US 2011246298 A1<br>US 2016071168 A1<br>WO 2011123564 A2 | | 06-10-2011<br>06-02-2013<br>06-10-2011<br>06-10-2011<br>06-10-2011<br>10-03-2016<br>06-10-2011 |
| US 2017193559 | A1 | 06-07-2017 | NONE | | |
| CN 108053252 | A | 18-05-2018 | NONE | | |
| US 2014304086 | A1 | 09-10-2014 | NONE | | |

EPO FORM P0459

For more details about this annex : see Official Journal of the European Patent Office, No. 12/82